## Europäisches Patentamt
## European Patent Office
## Office européen des brevets

(19)

(11) Publication number: **0 148 270**
A1

# EUROPEAN PATENT APPLICATION

(12)

published in accordance with Art. 158(3) EPC

(21) Application number: 84901617.5

(22) Date of filing: 19.04.84

Data of the international application taken as a basis:

(86) International application number: PCT/JP 84/00203

(87) International publication number: WO 84/04411 (08.11.84 84/26)

(51) Int. Cl.⁴: **G 06 F 3/02**, G 06 F 3/14, G 06 F 3/153

(30) Priority: 26.04.83 JP 73394/83

(43) Date of publication of application: 17.07.85 Bulletin 85/29

(84) Designated Contracting States: DE FR GB

(71) Applicant: FANUC LTD, 3580, Shibokusa Aza-Komanba Oshino-mura, Minamitsuru-gun Yamanashi 401-05 (JP)

(72) Inventor: MIYATA, Mitsuto, 1768-149, Yugi Hachioji-shi, Tokyo 192 (JP)
Inventor: NAGAOKA, Yukihito, Shinmei-Kopo 103 18-2, Shinmei 1-chome, Hino-shi Tokyo 191 (JP)

(74) Representative: Billington, Lawrence Emlyn et al, HASELTINE LAKE & CO Hazlitt House 28 Southampton Buildings Chancery Lane, London WC2A 1AT (GB)

(54) **KEY INPUT APPARATUS EMPLOYING DISPLAY.**

(57) In a key input apparatus in which, before final input processing of data supplied through a key input means, the data is temporarily stored in a key input buffer memory and is also displayed in a key input buffer display region on the screen of a display, changes to part of the data temporarily stored in the key input buffer memory is enabled. An auxiliary cursor used for indicating a memory location in the key input buffer memory which will be subsequently supplied from the key input means is provided in the key input buffer display region, separately from a main cursor. This auxiliary cursor can be moved by cursor-moving keys which are also used for the main cursor, enabling changes to data at memory locations in the key input buffer memory indicated by the auxiliary cursor.

S P E C I F I C A T I O N

KEY INPUT DEVICE WITH A DISPLAY

TECHNICAL FIELD

The present invention relates to a key input device with a display, and more particularly to improvement in or relating to means for making an error correction or the like to input data in a key input device of the type that the input data is once stored in a key input buffer storage means for displaying its contents on a display before it is subjected to final input processing.

BACKGROUND ART

In order to leave room for veryfying or modifying key input data by the operator in numerical control equipment provided with a CRT display, it is a general practice to once load the data entered from the keyboard in a key input buffer so that its contents are displayed in a key input buffer display area of the CRT display screen which is divided into a main display area and the key input buffer display area. In this case, according to the prior art, only one cursor is displayed in the main display area alone and the input data are stored in a sequential order, starting at the beginning of the key input buffer. By operating two pairs of cursor move keys, a position in the main display area where to perform an operation such as a modification, addition or the like by key input data is specified and, by pressing a key-in execute key after entering necessary data therefor, a final key-in operation, that is, processing for the modification, addition or the like is executed at the specified position.

By the way, as a person who has experienced such a key-in operation as mentioned above knows, erroneous data is often entered due to an error in pressing keys or by some other causes. In such a case, it is customary in the prior art to press a separately provided cancel key to cancel data entered until then. But this requires reentry of the data from the beginning, and hence is very cumbersome.

DISCLOSURE OF THE INVENTION

The present invention has been made in view of the above, and has for its object to permit easy and speedy correction of erroneous input data by providing, in addition to the cursor for the main display region, a cursor which, when a data input key is pressed, indicates a location in the key input buffer which is activated by the key and, by making the cursor movable.

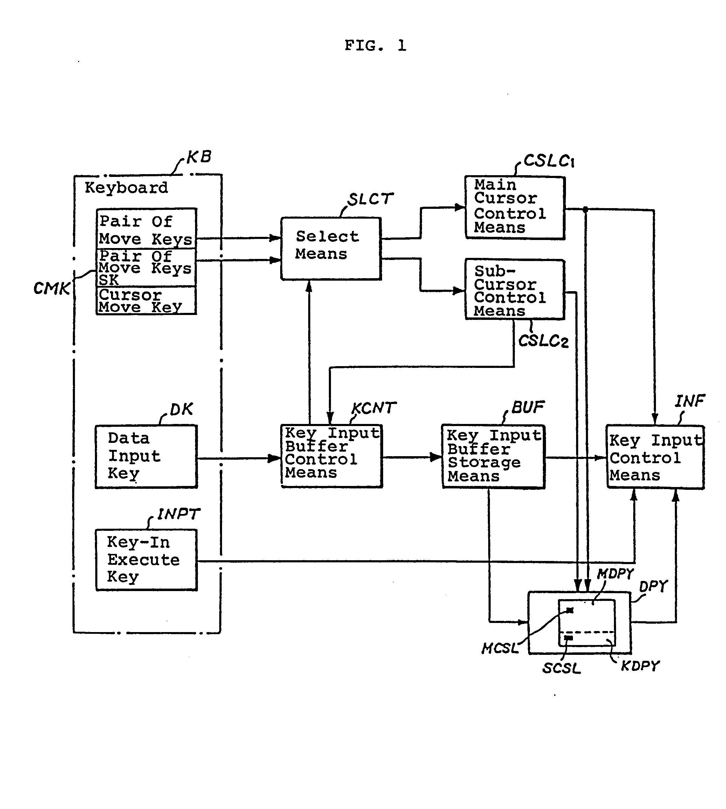

Fig. 1 is a diagram explanatory of the arrangement of the present invention.

Data, which is input by a data input key DK on a keyboard KB, is once stored in a key input buffer storage means BUF and its contents are displayed in a key input buffer display area KDPY of a display DPY. The display screen of the display DPY is divided into the key input buffer display area KDPY and a main display area MDPY, in which a main cursor MCSL and a sub-cursor SCSL are displayed,
respectively. Main cursor control means $CSLC_1$ is to display
the main cursor MCSL at a position where to perform an
operation according to the contents of the key input buffer
storage means BUF, and has a first control mode for moving
the main cursor MCSL left, right, up or down in response to
an operation of a cursor move keys CMK including two paris
of move keys on the keyboard KB and a second control mode
for moving the main cursor left or right in response to an
operation of a predetermined pari of move keys SK. Sub-
cursor control means $CSLC_2$ is to display the sub-cursor at
the position in the key input buffer storage means BUF where
the data input from the keyboard is written and is to move
the sub-cursor SCSL left or right in response to an operation of
a predetermined pair of move keys. Key input buffer control
means KCNT is to write the data input from the keyboard KB
into the key input buffer storage means BUF at the position
specified by the sub-cursor control means $CSLS_2$, and the
main cursor control means $CSLS_1$ and the sub-cursor control
means $CSLC_2$ are controlled in operation by select means SLCT
according to the presence or absence of data in the key input
buffer storage means BUF. That is, when no data is stored
in the key input buffer storage means BUF, the operation of
the sub-cursor control means $CSLC_2$ is inhibited, and when
data is stored in the key input buffer storage means, the
main cursor control means $CSLC_1$ is switched to the second control mode. Key input control means INPC responds to the pressing of a key-in execute key INPT to change the portion indicated by the main cursor MCSL in the main display area MDPY based on data stored in the key input buffer storage means BUF.

## BRIEF DESCRIPTION OF THE DRAWINGS

Fig. 1 is a diagram explanatory of the arrangement of the present invention; Fig. 2 is a block diagram illustrating the principal part of an example of the hardware structure of an embodiment of the present invention; Fig. 3 is a plan view of a CRT display screen; Fig. 4 is a plan view showing the principal part of a keyboard 20; and Figs. 5 to 11 are flowcharts showing an example of the software structure of the embodiment of the present inveniton.

## BEST MODE FOR CARRYING OUT THE INVENTION

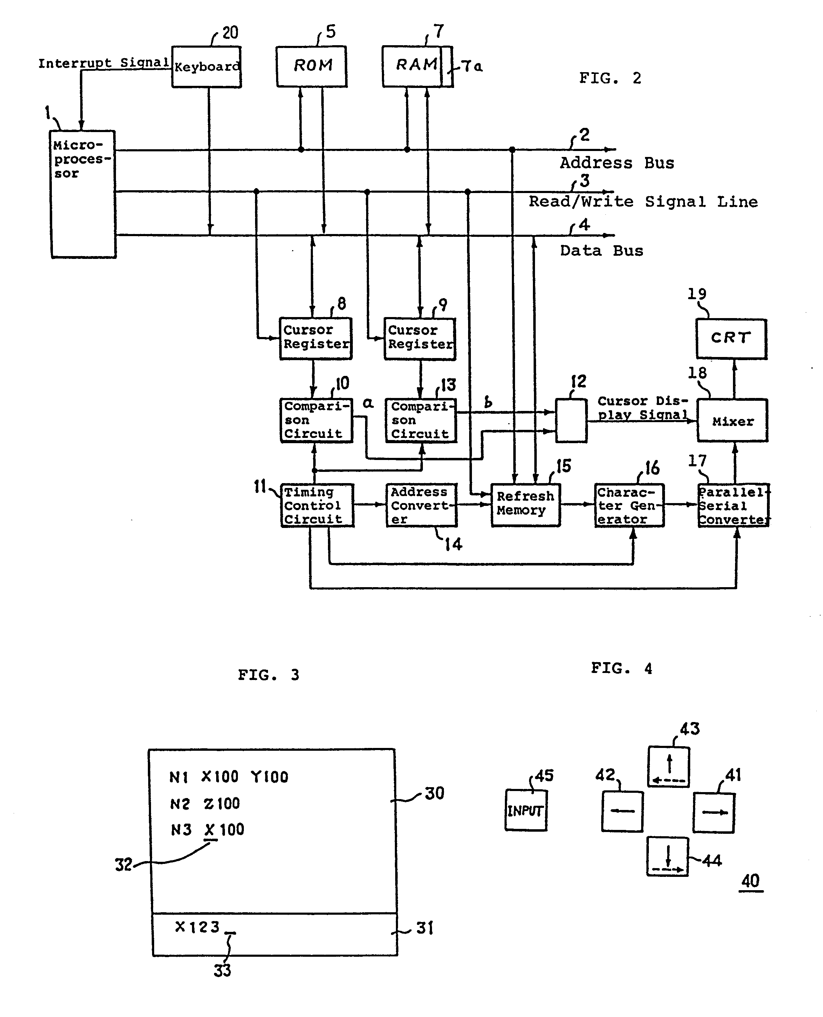

Fig. 2 is a block diagram illustrating the principal part of an example of the hardware structure of an embodiment of the present invention.

In Fig. 2, reference numeral 1 indicates a microprocessor, which is connected to peripheral circuits via an address bus 2, a read/write signal line 3 and a data bus 4. Reference numeral 5 designates a ROM, which stores various programs necessary for causing the microprocessor 1 to perform predetermined operations. Reference numeral 7 identifies a RAM, which has a key input buffer area 7a, a storage area for data to be displayed in the main display area and other storage areas.

0148270

Reference numeral 8 denotes a cursor register for the main cursor which, when a key-in execute key, for example, an input key is pressed, indicates the position in the main display area where an operation such as a change, addition or the like is carried out by data stored in the key input buffer area 7a until then, and 9 represents a cursor register for the sub-cursor which, when a data input key is pressed, indicates a storage location in the key input buffer area 7a which is activated by the key. Reference numeral 10 indicates a comparison circuit, which detects coincidence between the output of the cursor register 8 and the output from a timing control circuit 11 (a character synchronizing signal, a line synchronizing signal) and provides a cursor display signal a to a synthesizer 12. Reference numeral 13 also designates a comparison circuit, which provides a cursor display signal b to the synthesizer 12 when the outputs from the cursor register 9 and the timing control circuit 11 coincide with each other.

Further, reference numeral 14 identifies an address converter, which produces a scanning address for a refresh memory 15 from the output of the timing control circuit 11 (a character synchronizing signal, a line synchronizing signal). The refresh memory 15 is a memory which stores codes of characters to be displayed on the screen and the contents of which are cyclically read out by the output of the address converter 14, and the data thus read out is applied to a character generator ROM 16. The character generator ROM 16 is being supplied with a raster synchronizing signal from the timing control circuit 11, in addition to character codes, and a character pattern on a specified line of a specified character code is read out of the character generator ROM and is converted by a parallel-serial converter 17 into serial data, which is provided, as a video signal, via a mixer 18 to a CRT display part for display as a character. Further, in the mixer 17, the output of the synthesizer 12 (a cursor display signal) is mixed with the abovesaid serial data, and the main cursor and the sub-cursor are displayed at positions indicated by the cursor registers 8 and 9.

Reference numeral 20 idicates a keyboard, which, when a key is pressed, sends out an interrupt signal to the microprocessor 1, and input information is read into the microprocessor 1 via the data bus 4. In the case of the cursor move key being pressed, the cursor is controlled to move, and in the case of the data key being pressed, the data is once stored in the key input buffer area 7a of the RAM 7.

Fig. 3 is a plan view of the CRT display screen, which is divided into a main display area 30 and a key input buffer display area 31 for displaying the contents of the key input buffer area 7a, a main cursor 32 being movable in the main display area 30 and a sub-cursor 33 being movable in the key input buffer display area 31.

Fig. 4 is a plan view of the principal part of the keyboard 20, which is provided with a set of cursor move keys 40 made up of a pair of move keys 41 and 42 and another pair of move keys 43 and 44 and an input key 45 for causing the microprocessor 1 to execute processing according to loaded data, such as loading of data stored in the key input buffer area 7a into a specified position and so forth. The respective move keys 41 to 44 are used in the following manner:

(Except the period of entering data from data dey)

Move key 41 Pressing this, the main cursor 32 moves to the right horizontally.

Move key 42 Pressing this, the main cursor 32 moves to the left horizontally.

Move key 43 Pressing this, the main cursor 32 moves up vertically.

Move key 44 Pressing this, the main cursor 32 moves down vertically.

(In the period of entering data from data key)

Move key 41 Pressing this, the sub-cursor 33 moves to the right horizontally.

Move key 42 Pressing this, the sub-cursor 33 moves to the left horizontally.

Move key 43 Pressing this, the main cursor 32 moves to the left
　　　horizonally.

Move key 44 Pressing this, the main cursor 32 moves to the right
　　　horizonally.

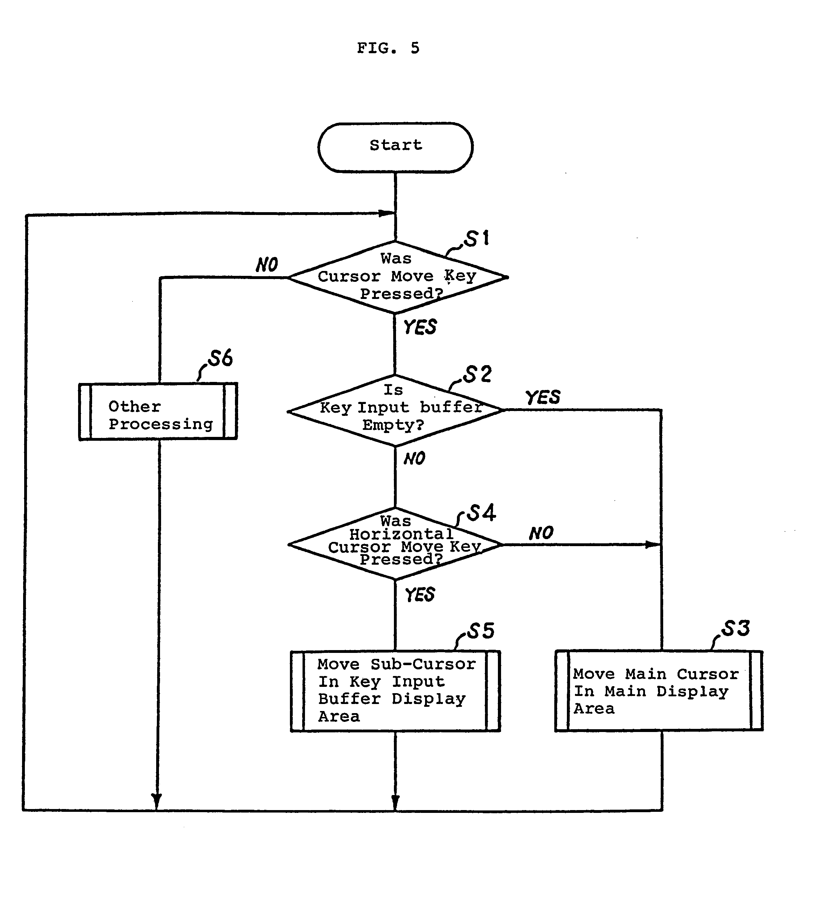

　　　Fig. 5 is a flowchart showing an example of the software structure for total processing of the cursor control
function in the embodiment of the present invention.

　　　The microporcessor 1 checks whether a key input from
the keyboard 20 has been made by the cursor move key or not
(S1) and, in the case of the cursor move key, controls the
main cursor 32 to move if the key input buffer area 7a is
empty (S2, S3). If the key input buffer area has already
stored therein data, the microcomputer checks whether the
pair of move keys 41 and 42 have been pressed or not (S4).
If it is decided that the move keys 41 and 42 have been
pressed, then the sub-cursor 33 is controlled to move (S5),
and if the move keys 43 and 44 have been pressed, then the
main cursor 32 is controlled to move (S3). That is, once
the data input from the keyboard 20 is started, the pair
of move keys 41 and 42 are exclusively used for the sub-
cursor 33 and, in the other cases, they are exclusively used
for the main cursor 32. When a key other than the cursor
move keys is pressed, other processing corresponding to the
pressed key is executed (S6). For instance, when a data input key as of a numeral or alphabetic character is pressed, its key code is stored in the key input buffer area 7a at a location indicated by the sub-cursor 33. Further, when the input key is pressed, the microprocessor 1, for instance, interprets the contents stored in the key input buffer area 7a and writes data into a predetermined position and, after the write operation, clears the contents of the key input buffer area 7a.

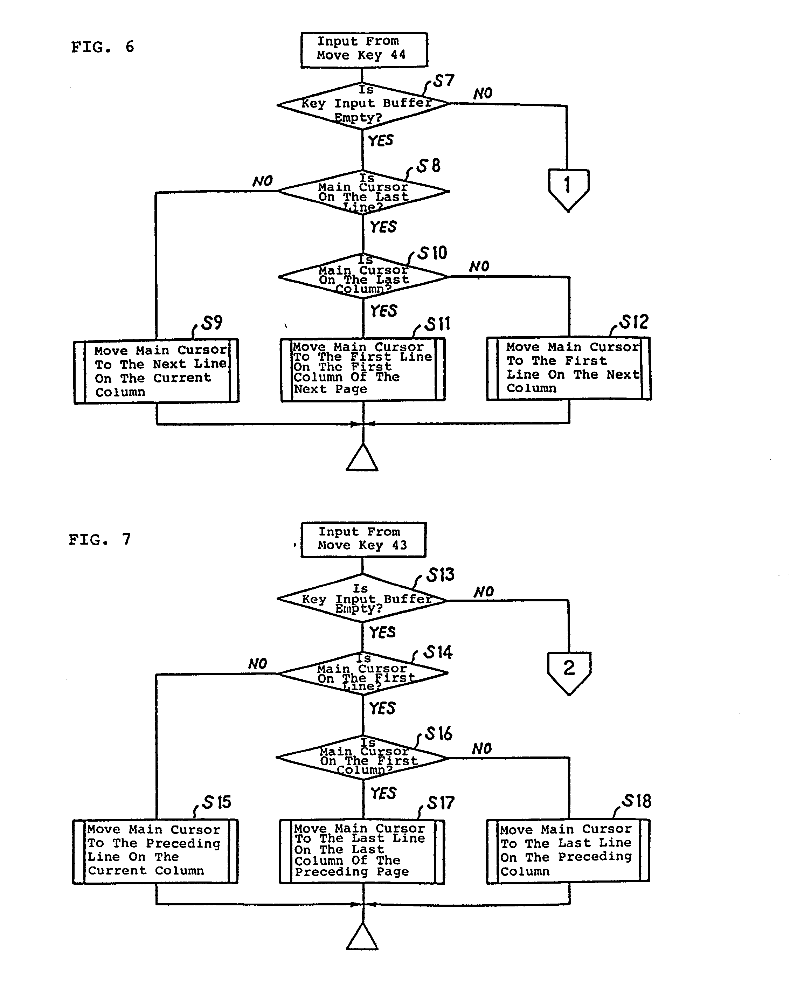

Figs. 6 to 11 are flowcharts showing an example of the software structure for implementing the functions of controlling the movement of the main cursor 32 and the sub-cursor 33.

(With reference to Fig. 6:)

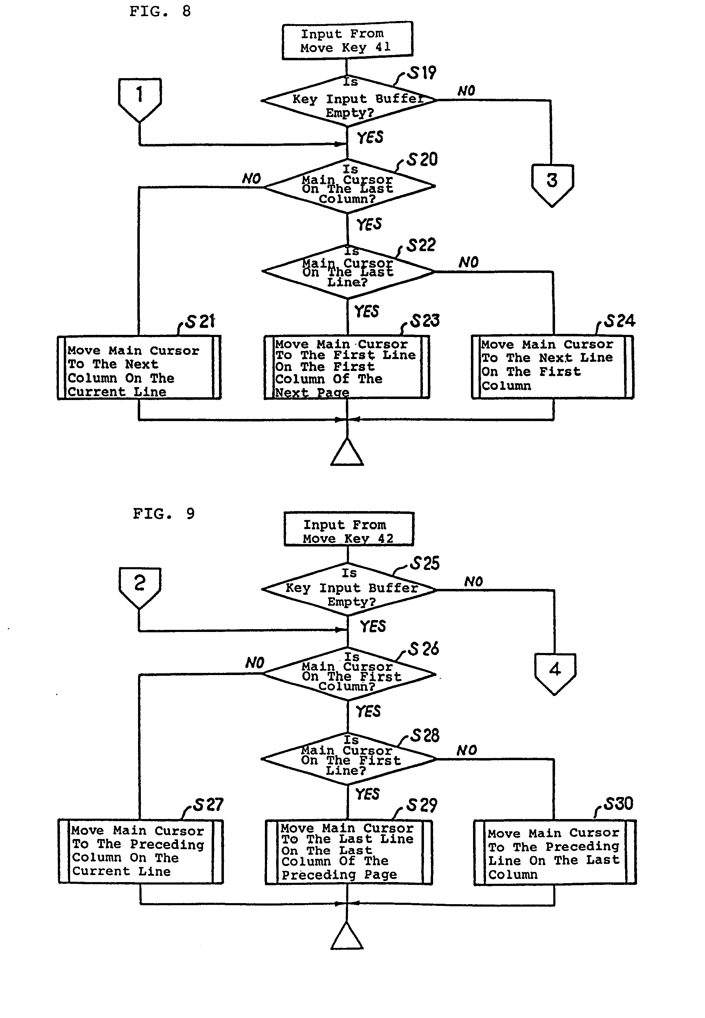

When the move key 44 is pressed, the microprocessor 1 checks first whether the key input buffer area 7a is empty or not (S7), and if so, it controls the main cursor 32 to move, but if not, the process proceeds to step S20 shown in Fig. 8. Then, the microprocessor 1 checks the current value of the main cursor 32 and, if it is not on the last line of the main display area 30, moves the main cursor 32 to the next line on the current column (S8, S9). When it is on the last line, the main cursor 32, if on the last column, is moved to the first line on the first column of the next page, and if it is not on the last column, then the main cursor is moved to the first line on the next column (S10 to S12). The checking of the current value of the main cursor 32 is done by comparing the contents of the cursor register 8 with a
reference value, and the movement of the main cursor 32 is
effected by modifying the contents of the cursor register 8.
(With reference to Fig. 7:)

When the move key 43 is pressed, the microprocessor
1 checks first whether the key input buffer area 7a is empty
or not (S13), and if so, it controls the main cursor 32 to
move, but if not, the process proceeds to step S26 shown
in Fig. 9.  Next, the microprocessor 1 checks the current
value of the main cursor 32 and, if it is not on the first
line of the main display area 30, moves the main cursor 32
to the immediately preceding line on the current column
(S14, S15).  When it is on the first line, the main cursor
32, if on the first column, is moved to the last line on the
last column of the previous page, and if it is not on the
first column, then the main cursor is moved to the last line
on the preceding column (S16 to S18).
(With reference to Fig. 8:)

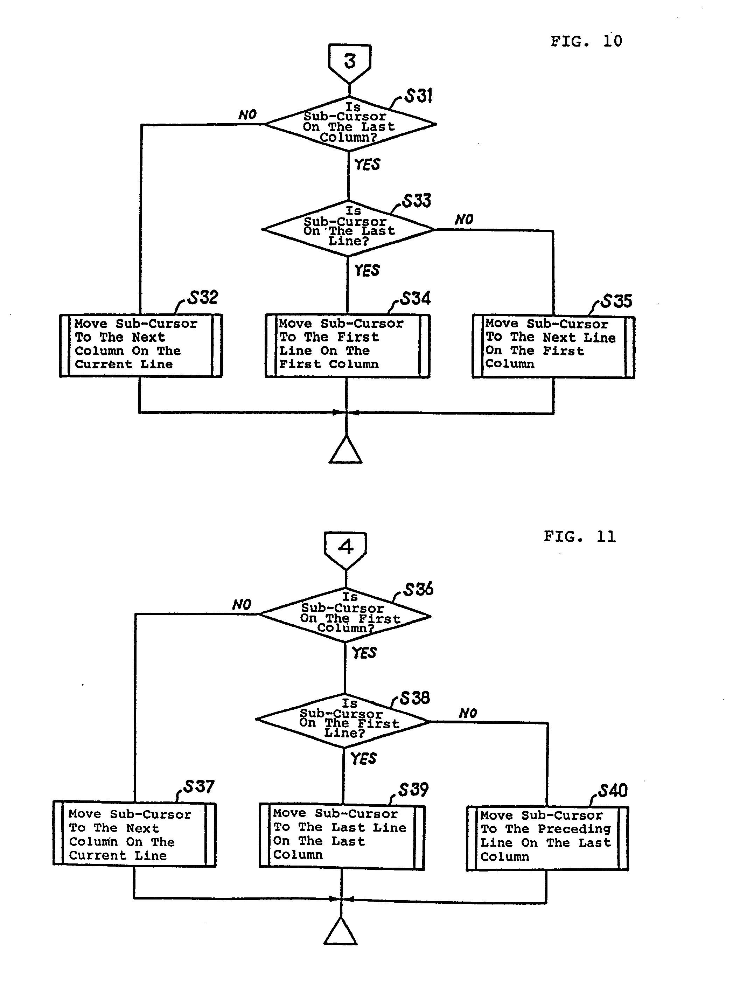

When the move key 41 is pressed, the microprocessor 1
checks first whether the key input buffer area 7a is empty
or not (S19), and if so, it controls the main cursor 32 to
move, but if not, the process proceeds to step S31 shown in
Fig. 10.  Next, the microprocessor 1 checks the current value
of the main cursor 32 and, if it is not on the last column
of the main display area 30, moves the main cursor 32 to
the next column on the current line (S20, S21).  When it is on the last column, the main cursor 32, if lying on the last line, is moved to the first line on the first column, and if it is not on the last line, the main cursor is moved to the next line on the first column (S22 to S24).

(With reference to Fig. 9:)

When the move key 42 is pressed, the microprocessor 1 checks first whether the key input buffer area 7a is empty or not (S25), and if so, it controls the main cursor 32 to move, but if not, the process proceeds to step S36 shown in Fig. 10.  Next, the microprocessor 1 checks the current value of the main cursor 32 and, if it is not on the first column of the main display area 30, moves the main cursor 32 to the preceding column on the current line (S26, S27).

When it is on the first column, the main cursor 32, if lying on the first line, is moved to the last line on the last column of the previous page, and if it is not on the first line, the main cursor is moved to the preceding line on the last column (S28 to S30).

(With reference to Fig. 10:)

In the case where the move key 41 is pressed when the key input buffer area 7a is not empty, the microprocessor 1 checks first the current value of the sub-cursor 33 and, if it is not on the last column of the key input buffer display area 31, moves the sub-cursor 33 to the next column on the current line (S31, S32).  When it is on the last column, the sub-cursor 33, if lying on the last line, is moved to the first line on the first column, and if it is not on the last
line, the sub-cursor is moved to the next line on the first
column (S33 to S35). Incidentally, the checking of the
current value of the sub-cursor 33 and its movement can be
carried out in the same manner as in the case of the main
cursor 32.

(With reference to Fig. 11:)

In the case where the move key 41 is pressed when the
key input buffer area 7a is not empty, the microprocessor
1 checks the current value of the sub-cursor 33 and, if it
is not on the first line of the key input buffer display
area 31, moves the sub-cursor 33 to the preceding column on
the current line (S37, S38). When it is on the first column,
the sub-cursor 33, if lying on the first line, is moved to
the last line on the last column, and if it is not on the
first line, the sub-cursor is moved to the preceding line
on the last column (S39 to S41).

Incidentally, when the main cursor 32 and the sub-
cursor 33 are in their initial state, they lie, for example,
on the first lines on the first columns of the main display
area 30 and the key input buffer display area 31, respectively,
and the sub-cursor 33 moved one character position to the
right for each data input, indicating the next input position.

With this embodiment of such an arrangement as described
above, for example, by calling edit contents onto the main
display are 30, operating the cursor move keys 40 to specify, for instrance, the position of insertion with the main cursor 32 and by entering characters from the keyboard 20, the input data are stored in the key input buffer display area 7a one after another and, at the same time, displayed in the key input buffer display area 31.  In the event that erroneous data has been entered, it is necessary only to operate the pair of move keys 41 and 42 of the cursor move keys 40 for moving the sub-cursor 33 to the position of the erroneous data and to enter correct data, thereby effecting a re-write at the position concerned in the key input buffer area 7a and displaying the correct contents.  Further, in the case of changing the position to edit during data entry, it is necessary only to move the main cursor 32 by operating the pair of move keys 43 and 44.  Then, by pressing the input key 45 of the keyboard 20, the contents of the key input buffer area 7a are inserted at the position concerned in the main display area in the above example.  Incidentally, while in the above embodiment the CRT display is employed as a display, it is also possible to use a liquid crystal display, plasma display or the like.  Also it is possible to use, as the pair of move keys for moving the sub-cursor 33, other combinations of, for example, the move keys 43 and 44, and 41 and 44.

As described above, according to the present invention, since a cursor is also provided in the key input buffer display area 31 and is made movable by the operation of the pair of move keys in the cursor move keys 40 during key input, a partial modification of data in the key input buffer area 7a,
which has been impossible in the past, is made possible,
markedly improving operability.  Moreover, according to the
present invention, since the sub-cursor 33 is moved through
utilization of a part of the cursor move keys 40 for moving
the main cursor 32 in the main display area, the keyboard can
be made smaller and less expensive than in the case of providing
cursor move keys for each of the both cursors.  Besides,
since the main cursor 32 can be moved left, right, up or down
even during key data input, the position to edit or the like
can also be changed.

C L A I M

A key input device with a display, characterized by
the provision of: key input means provided with two pairs of
cursor move keys, a plurality of data input keys and a key-in
execute key; key input buffer storage means for once storing
data input from the key input means; a display device having
its display screen divided into a key input buffer display
area for displaying the contents of the key input buffer storage means and a main display area for displaying other data;
sub-cursor control means for displaying, in the key input
buffer display area, a sub-cursor indicating a storage location in the key input buffer storage means where to write the
data input from the key input means, and for moving the sub-
cursor to the right or left in the horizontal direction in
response to an operation of a predetermined one of the two
pairs of cursor move keys; main cursor control means having
a first control mode for displaying, in the main display
area, a main cursor indicating a storage location where to
perform an operation in accordance with the contents of the
key input buffer storage means, and for moving the main cursor
left, right, up or down in response to an operation of the
two pairs of cursor move keys, and a second control mode for
moving the main cursor to the right or left in response to an
operation of the other pair of cursor move keys; key input
buffer control means for writing the data input from the key
input means into the key input buffer storage means at the

(16)                                        0148270

storage location indicated by the sub-cursor control means;

select means for inhibiting the operation of the sub-cursor control means in the case of no data being stored in the key input buffer storage means and for switchig the main cursor control means to the second mode in the case of data being stored in the key input buffer storage means; and key input control means for modifying a part in the main display area corresponding to the storage location indicated by the main cursor on the basis of data stored in the key input buffer storage means when the key-in execute key is pressed.

FIG. 1

0148270

1/6

0148270

FIG. 2

FIG. 3

FIG. 4

0148270

FIG. 5

```
                          ┌──────────┐
                          │  Start   │
                          └──────────┘
                                │
                                ▼
            NO            ╱─────────────╲    S1
      ┌─────────────────╱      Was       ╲
      │                 ╲ Cursor Move Key ╱
      │                  ╲   Pressed?    ╱
      │                   ╲─────────────╱
      │                         │ YES
      │                         ▼
      │       S6          ╱─────────────╲   S2
  ┌───────────┐     NO   ╱      Is       ╲     YES
  │  Other    │◄────────╲ Key Input buffer╱────────────┐
  │Processing │          ╲   Empty?     ╱              │
  └───────────┘           ╲─────────────╱              │
      │                         │ NO                   │
      │                         ▼                      │
      │                   ╱─────────────╲  S4           │
      │                  ╱      Was       ╲    NO        │
      │                 ╲   Horizontal    ╱────────────►│
      │                  ╲Cursor Move Key╱              │
      │                   ╲  Pressed?   ╱               │
      │                    ╲───────────╱                │
      │                         │ YES                   │
      │                         ▼                       ▼
      │              ┌──────────────────┐ S5  ┌──────────────────┐ S3
      │              │ Move Sub-Cursor  │     │ Move Main Cursor │
      │              │ In Key Input     │     │ In Main Display  │
      │              │ Buffer Display   │     │ Area             │
      │              │ Area             │     │                  │
      │              └──────────────────┘     └──────────────────┘
      │                         │                       │
      └─────────────────────────┴───────────────────────┘
```

0148270

**FIG. 6**

```
           ┌──────────────┐
           │ Input From   │
           │ Move Key 44  │
           └──────┬───────┘
                  │
            ┌─────┴─────┐  S7
         ╱ Is            ╲       NO
        ╱ Key Input Buffer ╲──────────────┐
        ╲    Empty?        ╱               │
         ╲────────────────╱                │
              │ YES                        │
              │                          ┌─┴─┐
         ┌────┴────┐  S8                 │ 1 │
      NO ╱   Is     ╲                    └───┘
    ┌───╱ Main Cursor ╲
    │   ╲ On The Last  ╱
    │    ╲   Line?    ╱
    │     ╲──────────╱
    │         │ YES
    │    ┌────┴────┐  S10
    │   ╱    Is     ╲         NO
    │  ╱ Main Cursor  ╲──────────────┐
    │  ╲ On The Last   ╱             │
    │   ╲  Column?    ╱              │
    │    ╲───────────╱               │
    │        │ YES                   │
```

| S9 | S11 | S12 |
|---|---|---|
| Move Main Cursor To The Next Line On The Current Column | Move Main Cursor To The First Line On The First Column Of The Next Page | Move Main Cursor To The First Line On The Next Column |

**FIG. 7**

```
           ┌──────────────┐
         · │ Input From   │
           │ Move Key 43  │
           └──────┬───────┘
                  │
            ┌─────┴─────┐  S13
         ╱ Is            ╲       NO
        ╱ Key Input Buffer ╲──────────────┐
        ╲    Empty?        ╱               │
         ╲────────────────╱                │
              │ YES                        │
              │                          ┌─┴─┐
         ┌────┴────┐  S14                │ 2 │
      NO ╱   Is     ╲                    └───┘
    ┌───╱ Main Cursor ╲
    │   ╲ On The First ╱
    │    ╲   Line?    ╱
    │     ╲──────────╱
    │         │ YES
    │    ┌────┴────┐  S16
    │   ╱    Is     ╲         NO
    │  ╱ Main Cursor  ╲──────────────┐
    │  ╲ On The First  ╱             │
    │   ╲  Column?    ╱              │
    │    ╲───────────╱               │
    │        │ YES                   │
```

| S15 | S17 | S18 |
|---|---|---|
| Move Main Cursor To The Preceding Line On The Current Column | Move Main Cursor To The Last Line On The Last Column Of The Preceding Page | Move Main Cursor To The Last Line On The Preceding Column |

0148270

FIG. 8

Input From
Move Key 41

1

S19
Is
Key Input Buffer
Empty?
NO
YES

3

S20
Is
Main Cursor
On The Last
Column?
NO

YES

S22
Is
Main Cursor
On The Last
Line?
NO

YES

S21
Move Main Cursor
To The Next
Column On The
Current Line

S23
Move Main Cursor
To The First Line
On The First
Column Of The
Next Page

S24
Move Main Cursor
To The Next Line
On The First
Column

FIG. 9

Input From
Move Key 42

2

S25
Is
Key Input Buffer
Empty?
NO
YES

4

S26
Is
Main Cursor
On The First
Column?
NO

YES

S28
Is
Main Cursor
On The First
Line?
NO

YES

S27
Move Main Cursor
To The Preceding
Column On The
Current Line

S29
Move Main Cursor
To The Last Line
On The Last
Column Of The
Preceding Page

S30
Move Main Cursor
To The Preceding
Line On The Last
Column

FIG. 10

```
                            ┌─3─┐
                            └─┬─┘
                              │
            NO        ╱◇╲      S31
         ┌─────────╱  Is   ╲
         │         ╲Sub-Cursor╱
         │          ╲On The Last╱
         │           ╲Column?╱
         │              │
         │             YES
         │              │
         │          ╱◇╲   S33
         │        ╱  Is   ╲      NO
         │      ╱Sub-Cursor╲────────────┐
         │      ╲On The Last╱            │
         │       ╲Line?    ╱             │
         │          │                    │
         │         YES                   │
         │          │                    │
    ┌────┴────┐S32  ┌────┴────┐S34  ┌────┴────┐S35
    │Move Sub-│    │Move Sub- │    │Move Sub- │
    │Cursor   │    │Cursor    │    │Cursor    │
    │To The Next│  │To The First│  │To The Next Line│
    │Column On The│ │Line On The │  │On The First│
    │Current Line│  │First Column│  │Column    │
    └────┬────┘    └────┬────┘    └────┬────┘
         │              │              │
         └──────────────┼──────────────┘
                        ▽
```

FIG. 11

```
                            ┌─4─┐
                            └─┬─┘
                              │
            NO        ╱◇╲      S36
         ┌─────────╱  Is   ╲
         │         ╲Sub-Cursor╱
         │          ╲On The First╱
         │           ╲Column?╱
         │              │
         │             YES
         │              │
         │          ╱◇╲   S38
         │        ╱  Is   ╲      NO
         │      ╱Sub-Cursor╲────────────┐
         │      ╲On The First╱           │
         │       ╲Line?    ╱             │
         │          │                    │
         │         YES                   │
         │          │                    │
    ┌────┴────┐S37  ┌────┴────┐S39  ┌────┴────┐S40
    │Move Sub-│    │Move Sub- │    │Move Sub- │
    │Cursor   │    │Cursor    │    │Cursor    │
    │To The Next│  │To The Last Line│ │To The Preceding│
    │Column On The│ │On The Last │  │Line On The Last│
    │Current Line│  │Column    │    │Column    │
    └────┬────┘    └────┬────┘    └────┬────┘
         │              │              │
         └──────────────┼──────────────┘
                        ▽
```

# INTERNATIONAL SEARCH REPORT

International Application No. PCT/JP84/00203

| I. CLASSIFICATION OF SUBJECT MATTER (if several classification symbols apply, indicate all) [3] |
|---|
| According to International Patent Classification (IPC) or to both National Classification and IPC |
| Int. Cl$^3$    G06F 3/02, G06F 3/14, G06F 3/153 |

| II. FIELDS SEARCHED |
|---|

**Minimum Documentation Searched [4]**

| Classification System | Classification Symbols |
|---|---|
| IPC | G06F 3/02, G06F 3/14, G06F 3/153 |

| Documentation Searched other than Minimum Documentation to the Extent that such Documents are included in the Fields Searched [5] | |
|---|---|
| Jitsuyo Shinan Koho | 1965 - 1983 |
| Kokai Jitsuyo Shinan Koho | 1971 - 1983 |

**III. DOCUMENTS CONSIDERED TO BE RELEVANT [14]**

| Category* | Citation of Document, [16] with indication, where appropriate, of the relevant passages [17] | Relevant to Claim No. [18] |
|---|---|---|
| A | JP, A, 55-6648 (Fujitsu Ltd.) 18 January 1980 (18. 01. 80) Page 4, upper column | 1 |

* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

| IV. CERTIFICATION | |
|---|---|
| Date of the Actual Completion of the International Search [2] | Date of Mailing of this International Search Report [2] |
| May 16, 1984 (16. 05. 84) | June 4, 1984 (04. 06. 84) |
| International Searching Authority [1] | Signature of Authorized Officer [20] |
| Japanese Patent Office | |

Form PCT/ISA/210 (second sheet) (October 1981)